# EUROPEAN PATENT APPLICATION

(11) **EP 3 770 824 A1**
(43) Date of publication of application: **27.01.2021**
(21) Application number: 20173610.5
(22) Date of filing: 08.05.2020
(51) Int. Cl.: G06N 3/04, G06N 3/063

(54) **COMPUTATION METHOD AND RELATED PRODUCTS OF RECURRENT NEURAL NETWORK**

(30) Priority: 26.07.2019 CN 201910681523
(71) Applicant: Cambricon Technologies Corporation Limited, Beijing 100191 (CN)
(72) Inventor: WU, Zhihui, Beijing, 100191 (CN); WANG, Ziyi, Beijing, 100191 (CN); WU, Linyang, Beijing, 100191 (CN)
(74) Representative: Huang, Liwei

(57) **Abstract**

The present disclosure provides a computation method and related products of a recurrent neural network. The computation methods includes the following steps: obtaining computation operators and data of the recurrent neural network, where the computation operators include n micro-operators of computation step, and the computation operators further include a mark number before a first micro-operator corresponding to a first computation step and jump micro-operators after an n-th micro-operator of computation step; and performing the n micro-operators of computation step on data at a first time to obtain output results of the first time; and performing the jump micro-operators at a second time to make the computation operators jump to the mark number and continue to perform the n micro-operators of computation step. The technical solution provided by the present disclosure has the advantage of low overhead.

## Description

### Technical Field

The disclosure relates to the field of neural network, particularly to a computation method and related products of a recurrent neural network.

### Background

Artificial Neural Network (ANN) is a research hotspot in the field of artificial intelligence since the 1980s. The ANN abstracts the human brain neuron network from the perspective of information processing to establish a simple model, and forms different networks according to different connection methods. In the field of engineering and academia, the artificial neural network is often referred to as a neural network. The neural network is an operation model consisting of a large number of interconnected nodes (or neurons). The operation of the existing neural network is based on the CPU (Central Processing Unit) or the GPU (Graphics Processing Unit) and a plurality of computation operators to implement the operation of the neural network.

### Summary

The present disclosure provides a tensor computation method and related products, which can implement the computation of a recurrent neural network of a single computation operator.

A first aspect of the present disclosure provides a computation method of a recurrent neural network, where the computation method includes the following steps:
obtaining computation operators and data of the recurrent neural network, where the computation operators include n micro-operators of computation step, and the computation operators further include a mark number before a first micro-operator corresponding to a first computation step and jump micro-operators after an n-th micro-operator of computation step; and
performing the n micro-operators of computation step on data at a first time to obtain output results of the first time; and performing the jump micro-operators at a second time to make the computation operators jump to the mark number and continue to perform the n micro-operators of computation step; where n is an integer greater than or equal to 2.

A second aspect of the present disclosure provides a computation device of the recurrent neural network, including:
an obtaining unit configured to obtain the computation operators and data of the recurrent neural network, where the computation operators include n micro-operators of computation step, and the computation operators further include the mark number before the first micro-operator corresponding to the first computation step and jump micro-operators after the n-th micro-operator of computation step; and
a computation unit configured to perform the n micro-operators of computation step on data at the first time to obtain output results of the first time, and configured to perform the jump micro-operators at the second time to make the computation operators jump to the mark number and continue to perform the n micro-operators of computation step.

A third aspect of the present disclosure provides a neural network chip including one or more computation devices of the recurrent neural network provided in the second aspect.

A fourth aspect of the present disclosure provides a combined processing device including the computation device of the recurrent neural network provided in the third aspect, a general-purpose interconnection interface and a general-purpose processing device, where the computation device of the recurrent neural network is connected to the general-purpose processing device through the general-purpose interconnection interface.

A fifth aspect of the present disclosure provides an electronic device including the computation device of the recurrent neural network provided in the second aspect or the chip provided in the third aspect.

A sixth aspect of the present disclosure provides a computer readable storage medium configured to store a computer program for electronic data exchange, where the computer program makes the computer to perform the computation method of the recurrent neural network provided in the first aspect.

A seventh aspect of the present disclosure provides a computer program product including a non-transitory computer readable storage medium storing the computer program, where the computer program makes the computer to perform the computation method of the recurrent neural network provided in the first aspect.

### Brief Description of the Drawings

Fig. 1 is a schematic diagram of a neural network operator.
Fig. 2 is a schematic flowchart of a computation method of a recurrent neural network.
Fig. 3 is a schematic flowchart of a computation method of a recurrent neural network.
Fig. 4 is a structural diagram of a computation device of a neural network of the present disclosure.
Fig.5a is a structural diagram of a combined processing device of the present disclosure.
Fig. 5b is another structural diagram of a combined processing device of the present disclosure.
Fig. 5c is a structural diagram of a processor board card of a neural network according to an embodiment of the present disclosure.
Fig.5d is a structural diagram of a package structure of a neural network chip according to an embodiment of the present disclosure.
Fig. 5e is a structural diagram of a neural network chip according to an embodiment of the present disclosure.
Fig. 6 is a structural diagram of a package structure of a neural network chip according to an embodiment of the present disclosure.
Fig. 6a is a structural diagram of another package structure of a neural network chip according to an embodiment of the present disclosure.

### Detailed Description of the Embodiments

To facilitate those skilled in the art to understand the present disclosure, technical solutions in the embodiments of the present disclosure will be described clearly and completely hereinafter with reference to the accompanied drawings in the embodiments of the present disclosure. Apparently, the described embodiments are merely some rather than all embodiments of the present disclosure. All other embodiments obtained by those of ordinary skill in the art based on the embodiments of the present disclosure without creative efforts shall fall within the protection scope of the present disclosure.

To facilitate those skilled in the art to understand the present disclosure, the technical terms involved in the embodiments of the present disclosure are explained below.

Artificial intelligence learning library: configured to accelerate various artificial intelligence learning algorithms on artificial intelligence processors. The artificial intelligence learning algorithms include, but are not limited to, deep learning algorithms, such as convolutional neural network algorithms, recurrent neural network algorithms, and the like. Specifically, the artificial intelligence learning library is configured to support various types of basic operators (may also be called computation operators). In practical implementations, through the combination of basic operators, a variety of machine learning algorithms can be implemented to meet the requirements of versatility, flexibility, and scalability.

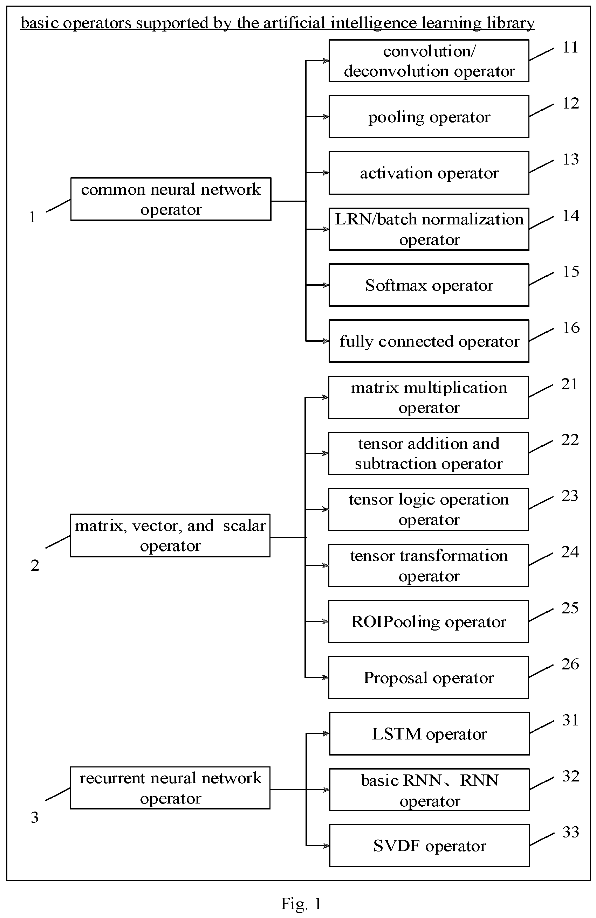

More specifically, the various types of basic operators may include: a common neural network operator 1, a matrix, a vector, a scalar operator 2, and a recurrent neural network operator 3. Fig. 1 is a schematic diagram of various basic operators supported by the artificial intelligence learning library provided by the embodiments of the present disclosure. As shown in Fig. 1, the various basic operators supported by the artificial intelligence learning library may include a common neural network operator 1, a matrix, a vector, a scalar operator 2, and a recurrent neural network operator 3. The common neural network operator 1 may include a convolution/deconvolution operator 11, a pooling operator 12, an activation operator 13, an LRN/batch normalization operator 14, a Softmax operator 15, a fully connected operator 16, where the activation operator 13 includes, but is not limited to, ReLU, Sigmoid, Tanh, and other operators that can be implemented by interpolation. The matrix, the vector, and the scalar operator 2 may include a matrix multiplication operator 21, a tensor addition and subtraction operator 22, a tensor logic operation operator 23, a tensor transformation operator 24, a ROIPooling operator 25, a Proposal operator 26 (may also be micro-operator), where the tensor transformation operator 24 includes, but is not limited to, Crop, Reshape, Slice, Concat. The recurrent neural network operator 3 may include an LSTM operator 31, a basic RNN (recurrent neural network) operator, an RNN operator 32, and an SVDF operator 33. In practical applications, users can also freely add new operators to the artificial intelligence learning library or change different versions of the artificial intelligence learning library according to own needs, which will not be described in detail in the present disclosure. How to optimize artificial intelligence learning tasks on development platforms based on the artificial intelligence learning library will be described in detail when debugging the artificial intelligence learning tasks.

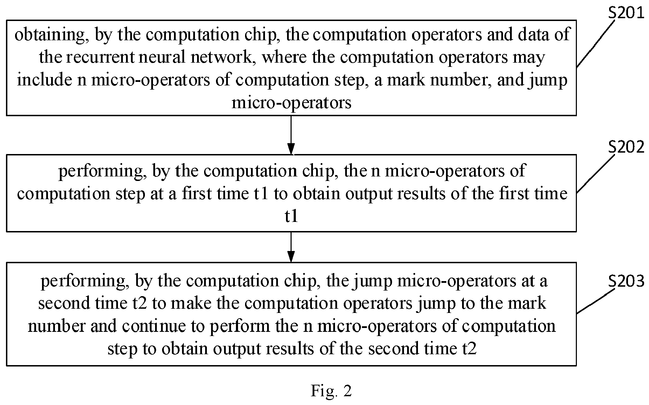

Fig. 2 provides a computation method of the neural network. The computation method is performed by a computation chip, where the computation chip may be a general-purpose processor such as a central processor or a graphics processor, or may be a dedicated neural network processor. The computation method may also be performed by a device containing a computation chip. As shown in Fig. 2, the computation method includes the following steps:
a step S201, obtaining, by the computation chip, the computation operators and data of the recurrent neural network, where the computation operators may include n micro-operators of computation step, a mark number, and jump micro-operators, where the mark number is placed before a first mirco-operator corresponding to a first computation step, and the jump micro-operators are placed after n micro-operators of computation step; where it should be noted that the data includes, but is not limited to, weight data, status data, and input data;
a step S202, performing, by the computation chip, the n micro-operators of computation step at a first time t1 to obtain output results of the first time t1; and
a step S203, performing, by the computation chip, the jump micro-operators at a second time t2 to make the computation operators jump to the mark number and continue to perform the n micro-operators of computation step to obtain output results of the second time t2.

The implementation method of the step S203 may specifically include:
reading input data, weight data, and status data of t2 according to an initial address of data storage and a jump offset, and performing the n micro-operators of computation step on the input data, the weight data, and the status data of t2 to obtain the output results of t2.

The technical solution provided by the present disclosure obtains the computation operators and data of the recurrent neural network, where the computation operators include n micro-operators of computation step, the mark number, and jump micro-operators. The technical solution includes: performing the n micro-operators of computation step at a first time t1 to obtain output results of the first time t1; and performing the jump micro-operators at a second time t2 to make the computation operators jump to the mark number and continue to perform the n micro-operators of computation step to obtain output results of the second time t2. In this way, only one computation operator is needed at t1 and t2, so that the computation of the recurrent neural network at 2 time slices to obtain the output results can be achieved by performing a single operator, which saves the count of computation operators, storage space, and cost.

Optionally, after the step S203, the computation method further includes:
reading input data, weight data, and status data of x-th time according to an initial address of data storage, a count of jumps, and a jump offset, and performing the n micro-operators of computation step on the input data, the weight data, and the status data of x-th time to obtain the output results of x-th time, where n≤x≤3.

Optionally, if x=n, output results of the x-th time are stored to the storage address of the output results of the recurrent neural network, that is, after n micro-operators of computation step are performed at the n-th time to obtain output results, the performing of the recurrent neural network is completed, and then the output results are determined as output results of the recurrent neural network.

Optionally, the n computation micro-operators include: multiplication operators, addition operators, and activation operators.

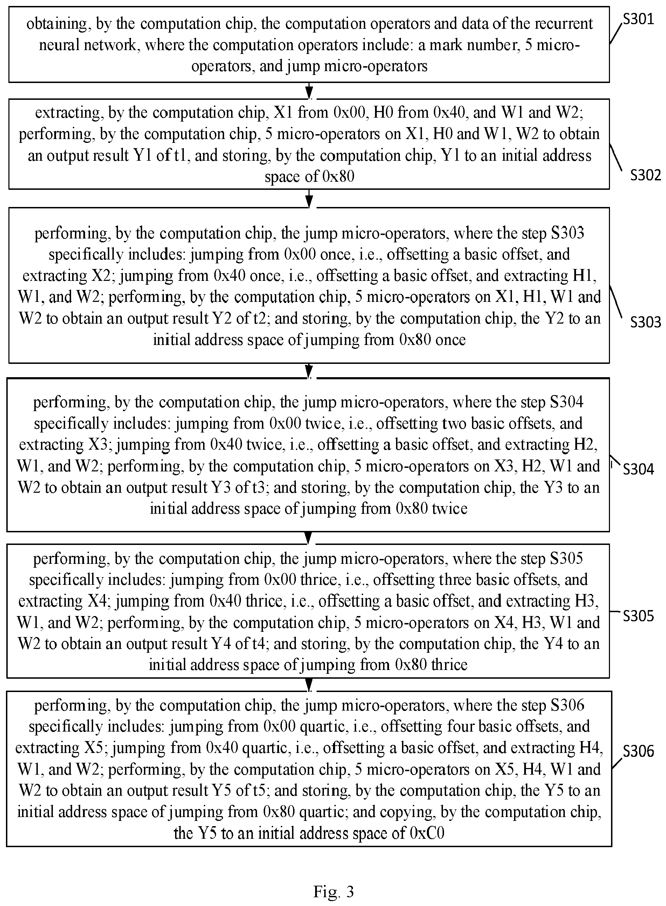

Fig. 3 provides a computation method of the neural network. The computation method is performed by the computation chip, where the computation chip may be a general-purpose processor such as a central processor or a graphics processor, or may be a dedicated neural network processor. The computation method may also be performed by a device containing a computation chip. A computation formula of the computation method of the recurrent neural network is: Ht = tanh (W1 ^{∗} Xt + W2 ^{∗} Ht-1 + b1 + b2), where H is a tensor and represents a status of weight; the subscript t represents a count of time slice, t starts counting from 1, where t-1= 0 represents the initial value of H. In the present disclosure, t=5, X is a tensor and represents a collection of input data; the subscript t starts counting from 1, that is X={X1, X2, X3, X4, X5}. W1 and W2 are usually matrixes, W1 and W2 represent the weight of input data and input weight status respectively. b1 and b2 are tensors, and represent two biases respectively. Y is a tensor and represents a collection of output data; t starts counting from 1, that is, Y={Y1, Y2, Y3, Y4, Y5}. The storage addresses of the X, Y, H are shown in Table 1:

**Table 1:**

| | t1 | t2 | t3 | t4 | t5 |
|---|---|---|---|---|---|
| 0x00 | &X₁ | &X₂ | &X₃ | &X₄ | &X₅ |
| 0x40 | &H₀ | &Y₁ | &Y₂ | &Y₃ | &Y₄ |
| 0x80 | &Y₁ | &Y₂ | &Y₃ | &Y₄ | &Y₅ |
| 0xC0 | | | | | &H₅ |

Table 1 provides a compiler with four initial addresses. The four initial addresses are: 0x00, 0x40, 0x80, and 0xC0, which correspond to the initial addresses of X, H, and Y, respectively. As shown in Fig. 3, the computation method includes the following steps:
a step S301: obtaining, by the computation chip, the computation operators and data of the recurrent neural network, where the computation operators include: a mark number, 5 micro-operators, and jump micro-operators, where the 5 micro-operators may specifically include: 2 tensor addition micro-operators, 2 tensor multiplication micro-operators, and an activation micro-operator;
a step S302: extracting, by the computation chip, X1 from 0x00, Ho from 0x40, and W1 and W2; performing, by the computation chip, 5 micro-operators on X₁, H₀, W1, and W2 to obtain an output result Y1 of t1, and storing, by the computation chip, Y1 to an initial address space of 0x80;
a step S303: performing, by the computation chip, the jump micro-operators, where the step S303 specifically includes: jumping from 0x00 once, *i.e*., offsetting a basic offset, and extracting X₂; jumping from 0x40 once, *i.e*., offsetting a basic offset, and extracting H₁, W₁, and W2; performing, by the computation chip, 5 micro-operators on X₁, H₁, W1 and W2 to obtain an output result Y2 of t2; and storing, by the computation chip, the Y2 to an initial address space of jumping from 0x80 once;
a step S304: performing, by the computation chip, the jump micro-operators, where the step S304 specifically includes: jumping from 0x00 twice, *i.e*., offsetting two basic offsets, and extracting X₃; jumping from 0x40 twice, *i.e*., offsetting a basic offset, and extracting H₂, W₁, and W2; performing, by the computation chip, 5 micro-operators on X₃, H₂, W1, and W2 to obtain an output result Y3 of t3; and storing, by the computation chip, the Y3 to an initial address space of jumping from 0x80 twice;
a step S305: performing, by the computation chip, the jump micro-operators, where the step S305 specifically includes: jumping from 0x00 thrice, *i.e*., offsetting three basic offsets, and extracting X₄; jumping from 0x40 thrice, *i.e*., offsetting a basic offset, and extracting H₃, W₁, and W2; performing, by the computation chip, 5 micro-operators on X₄, H₃, W1, and W2 to obtain an output result Y4 of t4; and storing, by the computation chip, the Y4 to an initial address space of jumping from 0x80 thrice; and
a step S306: performing, by the computation chip, the jump micro-operators, where the step S306 specifically includes: jumping from 0x00 quartic, *i.e.,* offsetting four basic offsets, and extracting X₅; jumping from 0x40 quartic, *i.e*., offsetting a basic offset, and extracting H₄, W₁, and W2; performing, by the computation chip, 5 micro-operators on X₅, H₄, W1, and W2 to obtain an output result Y5 of t5; and storing, by the computation chip, the Y5 to an initial address space of jumping from 0x80 quartic; and copying, by the computation chip, the Y5 to an initial address space of OxCO.

The technical solution provided by the present disclosure obtains the computation operators and data of the recurrent neural network, where the computation operators include n micro-operators of computation step, the mark number, and jump micro-operators. The technical solution includes: performing the n micro-operators of computation step at a first time t1 to obtain output results of the first time t1; and performing the jump micro-operators at a second time t2 to make the computation operators jump to the mark number and continue to perform the n micro-operators of computation step to obtain output results of the second time t2. In this way, only one computation operator is needed at t1, t2, t3, t4, and t5, so that the computation of the recurrent neural network at 5 time slices to obtain the output results can be achieved by performing a single operator, which saves the count of computation operators, IO overhead, storage space, and cost.

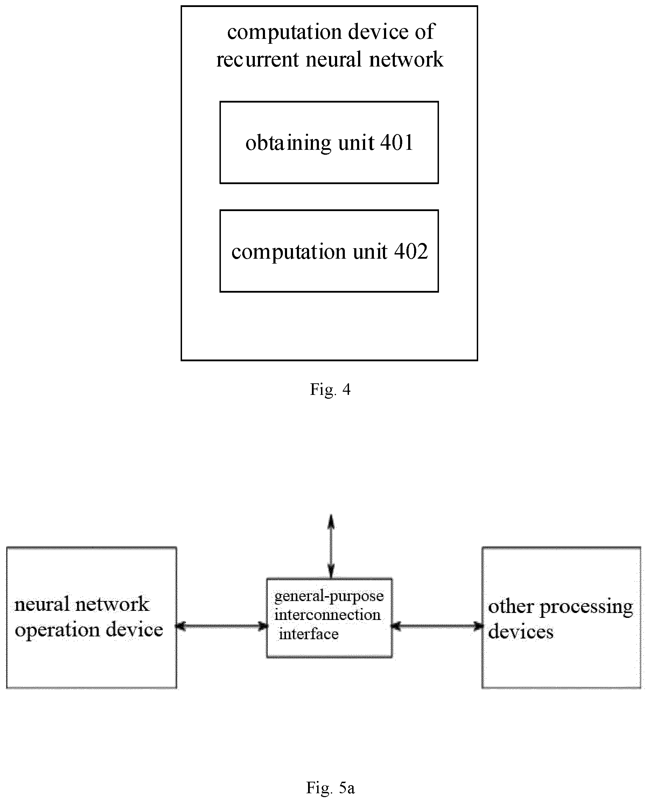

Fig. 4 provides a computation device of the recurrent neural network. The computation device includes:
an obtaining unit 401 configured to obtain the computation operators and data of the recurrent neural network, where the computation operators include n micro-operators of computation step, and the computation operators further include the mark number before the first micro-operator corresponding to the first computation step and jump micro-operators after the n-th micro-operator of computation step; and
a computation unit 402 configured to perform the n micro-operators of computation step on data at the first time to obtain output results at the first time, and configured to perform the jump micro-operators at the second time to make the computation operators jump to the mark number and continue to perform the n micro-operators of computation step.

The technical solution provided by the present disclosure obtains the computation operators and data of the recurrent neural network, where the computation operators include n micro-operators of computation step, the mark number, and jump micro-operators. The technical solution includes: performing the n micro-operators of computation step at a first time t1 to obtain output results of the first time t1; and performing the jump micro-operators at a second time t2 to make the computation operators jump to the mark number and continue to perform the n micro-operators of computation step to obtain output results of the second time t2. In this way, only one computation operator is needed at t1 and t2, so that the computation of the recurrent neural network at 2 time slices to obtain the output results can be achieved by performing a single operator, which saves the count of computation operators, storage space, and cost.

Optionally, the computation unit 402 reads input data, weight data, and status data of x-th time according to an initial address of data storage, a count of jumps, and a jump offset, and performs the n micro-operators of computation step on the input data, the weight data, and status data of x-th time to obtain the output results of x-th time, where n≤x≤3.

Optionally, if x=n, the computation unit 402 stores output results of the x-th time to the storage address of the output results of the recurrent neural network, that is, after n micro-operators of computation step are performed at the n-th time to obtain output results, the performing of the recurrent neural network is completed, and then the output results are determined as output results of the recurrent neural network.

The present disclosure further provides a neural network operation device including one or more chips, where the chip may be a general-purpose chip or a dedicated AI chip for obtaining data to be operated and control information from other processing devices, performing a specified neural network operation, and transmitting an operation result to peripheral devices through an I/O interface. The peripheral devices may include a camera, a displayer, a mouse, a keyboard, a network card, a wifi interface, a server, and the like. When the neural network operation device includes more than one chip, the chips can interconnect and transfer data through a specific structure, for example, the chips can interconnect and transfer data through a PCIE bus to support larger-scale neural network operations. In this way, the chips may share the same one control system or have respective control systems; the chips may share the same one memory or have respective memories; and the chips may deploy an interconnection manner of any arbitrary interconnection topology.

The neural network operation device has high compatibility and can be connected to various types of servers through the PCIE interface.

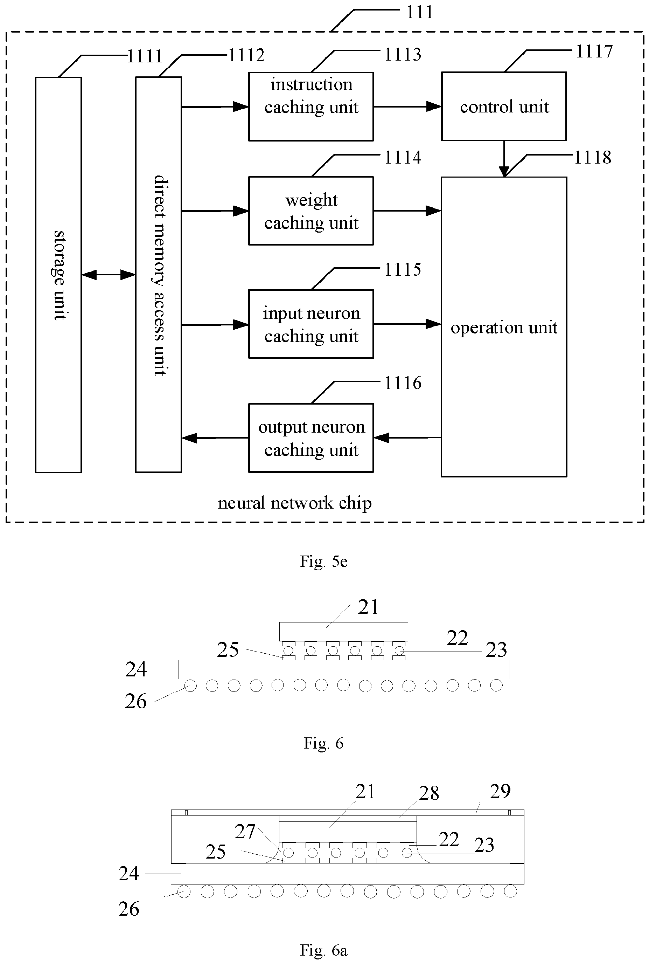

The present disclosure further provides a combined processing device, and the combined processing device may include the neural network operation device, a general-purpose interconnection interface, and other processing devices (*i.e*., general-purpose processing devices). The neural network operation device may interact with the other processing devices to jointly perform operations specified by users. Fig. 5a is a schematic diagram of a combined processing device.

The other processing devices include one or more processor types of general-purpose/special-purpose processors such as CPU, GPU, a neural network processor, and the like. The count of processors included in the other processing devices is not limited in the present disclosure. The other processing devices used as the interface between the neural network operation device and external data or control, which includes data transfer, are configured to perform basic control such as starting and stopping of the neural network operation device; and the other processing devices may also cooperate with the neural network operation devices to perform operation tasks.

The general-purpose interconnection interface is configured to transfer data and control operators between the neural network operation device and the other processing devices. The neural network operation device may obtain required input data from the other processing devices, and then write the required input data into an on-chip storage device of the neural network operation device; or obtain control operators from the other processing devices and then write the control operators into an on-chip control cache in the neural network operation device; or read data in a storage module of the neural network operation device and then transfer the data to the other processing devices.

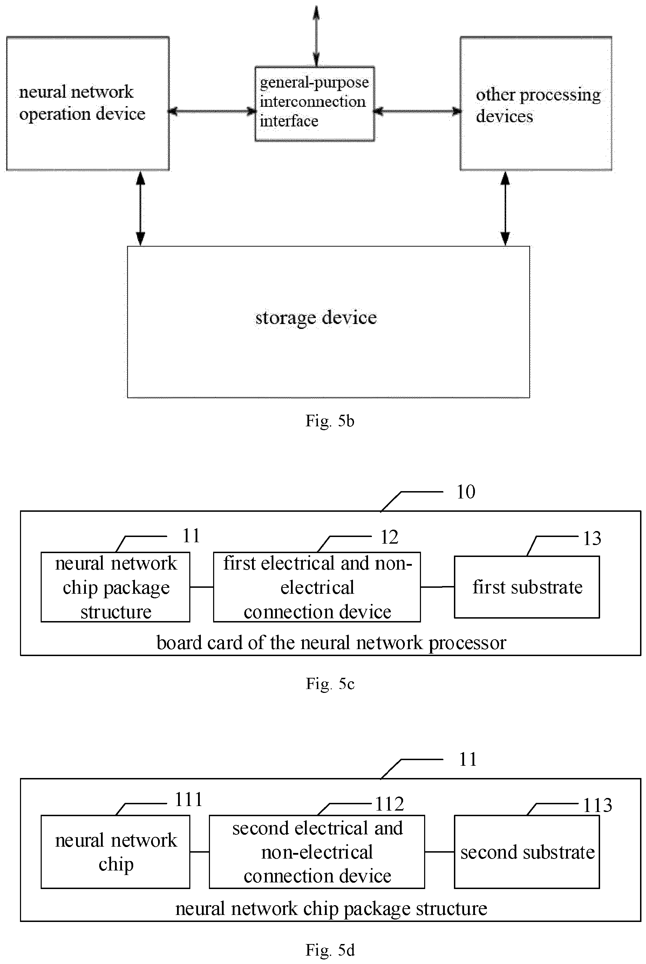

Optionally, as shown in Fig. 5b, the combined processing device further includes a storage device configured to store data required by the operation unit/operation device or other operation units, especially the required data that cannot be fully stored in the internal storage of the neural network operation device or the other processing devices.

The combined processing device may be used as an SOC on-chip system of devices such as mobile phones, robots, drones, and video surveillance devices, which may effectively reduce the core area of the control part, improve processing speed, and reduce overall power consumption. In this case, the general-purpose interconnection interface of the combined processing device is connected to some components of the device, where the some components may include a camera, a displayer, a mouse, a keyboard, a network card, a wifi interface, and the like.

Fig. 5c is a structural diagram of a processor board card of a neural network according to an embodiment of the present disclosure. As shown in Fig. 5c, a processor board card 10 of a neural network includes a neural network chip package structure 11, a first electrical and non-electrical connection device 12, and a first substrate 13.

The specific structure of the neural network chip package structure 11 is not limited in the present disclosure. As shown in Fig. 5d, the neural network chip package structure 11 includes: a neural network chip 111, a second electrical and non-electrical connection device 112, and a second substrate 113.

The specific form of the neural network chip 111 is not limited in the present disclosure. The neural network chip 111 includes, but is not limited to, a neural network chip integrated with a neural network processor. The chip can be made of silicon materials, germanium materials, quantum materials, molecular materials, or the like. The neural network chip can be packaged according to actual situations (such as harsh environment) and different application requirements, so that most of the neural network chip can be packaged. Pins on the neural network chip are connected to the outside of the package structure through conductors such as gold wires for circuit connection with the outer layer.

The specific structure of the neural network chip 111 is not limited in the present disclosure.

The present disclosure is not intended to limit the types of the first substrate 13 and the second substrate 113. The first substrate 13 and the second substrate 113 may be a printed circuit board (PCB), a printed wiring board (PWB), or other circuit boards. The manufacturing materials of the PCB are not limited in the present disclosure, either.

The second substrate 113 of the present disclosure is configured to carry the neural network chip 111, and the neural network chip package structure 11 obtained by connecting the neural network chip 111 and the second substrate 113 through the second electrical and non-electrical connection device 112 is configured to protect the neural network chip 111, so as to facilitate further packaging of the neural network chip package structure 11 and the first substrate 13.

The specific packaging modes and corresponding structure of the second electrical and non-electrical connection device 112 are not limited in the present disclosure. According to actual situations and different application requirements, appropriate packaging mode can be selected and simply improved, such as a Flip Chip Ball Grid Array Package (FCBGAP), a Low-profile Quad Flat Package (LQFP), a Quad Flat Package with Heat sink (HQFP), a Quad Flat Non-lead Package (QFN), a Fine-pitch Ball Grid Package (FBGA), or other packaging methods.

The Flip Chip may be suitable for cases where the requirement on the area after packaging is high or inductance of a conductive wire and transmission time of a signal are sensitive. In addition, the packaging mode of Wire Bonding may be adopted to reduce the cost and increase flexibility of the package structure.

The Ball Grid Array may provide more pins, and the conductive wire of the pins is short on average, which has a function of transmitting signals at high speed, where a Pin Grid Array (PGA), a 0 Insertion Force (ZIF), a Single Edge Contact Connection (SECC), a Land Grid Array (LGA), and other package method may be adopted.

Optionally, the packaging mode of Flip Chip Ball Grid Array may be adopted to package the neural network chip 111 and the second substrate 113. Fig. 6 is a schematic diagram of a neural network chip package structure. As shown in Fig. 6, the chip package structure includes a neural network chip 21, a pad 22, a bump 23, a second substrate 24, a connection point 25 on the second substrate 24, and a pin 26.

The pad 22 is connected to the neural network chip 21, and the bump 23 is formed by welding between the pad 22 and the connection point 25 on the second substrate 24 to connect the neural network chip 21 and the second substrate 24, thereby realizing the package of chip 21.

The pin 26 may be configured to connect with an external circuit of the package structure (for example, the first substrate 13 on the board card 10 of the neural network processor) to transfer external data and internal data, which may facilitate the neural network chip 21 or the processor processing corresponding to the neural network chip 21 processing data. The type and number of pins are not limited hereto. Different types of pins can be selected according to different packaging technologies, and are arranged according to certain rules.

Optionally, the neural network chip package structure may further include an insulating filler disposed in the gap between the pad 22, the bump 23, and the connection point 25 for preventing interference between bumps, where the material of the insulating filler may be silicon nitride, silicon oxide, or silicon oxynitride; and the interference may include electromagnetic interference, inductance interference, and the like.

Optionally, the neural network chip package structure may further include a heat dissipation device for dissipating heat generated by the neural network chip 21, where the heat dissipation device may be a piece of metal with good thermal conductivity, a fin, or a radiator such as a fan.

For example, as shown in Fig. 6a, the neural network chip package structure 11 may include the neural network chip 21, the pad 22, the bump 23, the second substrate 24, the connection point 25 on the second substrate 24, the pin 26, an insulating filler 27, thermal grease 28, and a fin 29 with metal housing, where the thermal grease 28 and the fin 29 with metal housing are configured to dissipate the heat generated by the neural network chip 21.

Optionally, the neural network chip package structure 11 may further include a reinforcing structure, where the reinforcing structure is connected to the pad 22 and is buried in the bump 23 to enhance the connection strength between the bump 23 and the pad 22. The reinforcing structure may be a metal wire structure or a columnar structure, which is not limited in the present disclosure.

The specific form of the first electrical and non-electrical device 12 is not limited in the present disclosure. Please refer to the description of the second electrical and non-electrical device 112, that is, the neural network chip package structure 11 may be packaged by welding, or by connecting the second substrate 113 and the first substrate 13 through a connecting line or an inserting method, so as to subsequently replace the first substrate 13 or the neural network chip package structure 11.

Optionally, the first substrate 13 may include an interface of the memory unit for expanding a storage capacity, such as a Synchronous Dynamic Random Access Memory (SDRAM), a Double Date Rate (DDR) SDRAM, and the like. By expanding the memory, the processing capacity of the neural network processor may be improved.

The first substrate 13 may further include a Peripheral Component Interconnect-Express (PCI-E or PCIe) interface, a Small Form-factor Pluggable (SFP) interface, and an Ethernet interface, a Controller Area Network (CAN) interface, *etc.* for data transfer between the package structure and the external circuit, which may improve operating speed and convenience of operation.

By packaging the neural network processor as the neural network chip 111, packaging the neural network chip 111 as the neural network chip package structure 11, and packaging the neural network chip package structure 11 as the board card 10 of the neural network, vacancy of the current neural networks may be filled. Furthermore, data interaction with the external circuit (for example, a computer motherboard) may be performed through an interface (slot or ferrule) on the board card, that is, the function of the neural network processor may be implemented by directly using the board card 10 of the neural network, and the neural network chip 111 may be protected. Other modules may be added to the board card 10 of the neural network, which may increase the application scope and operating efficiency of the neural network processor.

An embodiment of the present disclosure provides an electronic device including the board card 10 of the neural network or the neural network chip package structure 11.

The electronic device may include a data processing device, a robot, a computer, a printer, a scanner, a tablet computer, an intelligent terminal, a mobile phone, an automobile data recorder, a navigator, a sensor, a webcam, a cloud server, a camera, a video camera, a projector, a watch, an earphone, a mobile storage, wearable equipment, a transportation means, a household electrical appliance and/or medical equipment.

The transportation means may include an airplane, a ship and/or a car. The household electrical appliance includes a television, an air conditioner, a microwave oven, a refrigerator, an electric rice cooker, a humidifier, a washing machine, an electric lamp, a gas cooker and a range hood. The medical equipment includes a nuclear magnetic resonance spectrometer, a B-ultrasonic scanner, and/or an electrocardiograph.

Purposes, technical solutions and beneficial effects of the disclosure are further described above with the specific embodiments in detail. It should be understood that the above is only the specific embodiments of the present disclosure and not intended to limit the disclosure. Any modifications, equivalent replacements, improvements, and the like made within the spirit and principle of the disclosure shall fall within the scope of protection of the disclosure.

## Claims

1. A computation method of a recurrent neural network, comprising:
obtaining computation operators and data of the recurrent neural network, wherein the computation operators include n micro-operators of computation step, and the computation operators further include a mark number before a first micro-operator corresponding to a first computation step and jump micro-operators after an n-th micro-operator of computation step; and
performing the n micro-operators of computation step on data at a first time to obtain output results of the first time; and performing the jump micro-operators at a second time to make the computation operators jump to the mark number and continue to perform the n micro-operators of computation step; wherein n is an integer greater than or equal to 2.

2. The computation method of the recurrent neural network of claim 1, wherein
the data includes weight data, status data, and input data.

3. The computation method of the recurrent neural network of claim 1 or claim 2, wherein the computation operators further include an initial address of data storage and a jump offset, wherein the performing the jump micro-operators at the second time to make the computation operators jump to the mark number and continue to perform the n micro-operators of computation step includes:
reading input data, weight data, and status data of the second time according to the initial address of data storage and the jump offset, and performing the n micro-operators of computation step on the input data, the weight data, and the status data to obtain output results of the second time.

4. The computation method of the recurrent neural network of claim 1 or claim 2, wherein the computation operators further include the initial address of data storage and the jump offset, wherein the computation method further includes:
reading input data, weight data, and status data of x-th time according to the initial address of data storage, a count of jumps and the jump offset, and performing the n micro-operators of computation step on the input data, the weight data, and the status data to obtain output results of x-th time, where n≤x≤3.

5. The computation method of the recurrent neural network of claim 4, wherein when x=n, the computation method further includes:
copying the output results of x-th time to a storage address of output results of the recurrent neural network.

6. The computation method of the recurrent neural network of any one of claims 1-5, wherein
the n computation micro-operators include multiplication operators and addition operators.

7. The computation method of the recurrent neural network of claim 6, wherein
the n-th micro-operator of computation step is an activation operator.

8. A computation device of a recurrent neural network, comprising:
an obtaining unit configured to obtain computation operators and data of the recurrent neural network, wherein the computation operators include n micro-operators of computation step, and the computation operators further include a mark number before a first micro-operator corresponding to a first computation step and jump micro-operators after an n-th micro-operator of computation step; and
a computation unit configured to perform the n micro-operators of computation step on data at a first time to obtain output results of the first time, and configured to perform the jump micro-operators at a second time to make the computation operators jump to the mark number and continue to perform the n micro-operators of computation step.

9. A computation chip, comprising the computation device of the recurrent neural network of claim 8.

10. An electronic device, comprising the computation chip of claim 9 or the computation device of the recurrent neural network of claim 8.

11. A computer program product, comprising a non-transitory computer readable storage medium storing the computer program, wherein the computer program enables a computer to perform the computation method of the recurrent neural network of any one of claims 1-7.
